Europäisches Patentamt

European Patent Office

Office européen des brevets

(19)

(11) Publication number:

**0 288 967**
**A1**

(12) # EUROPEAN PATENT APPLICATION

(21) Application number: 88106651.8

(22) Date of filing: 26.04.88

(51) Int. Cl.⁴: **F25D 29/00**

(30) Priority: 29.04.87 IT 2030787

(43) Date of publication of application:
**02.11.88 Bulletin 88/44**

(84) Designated Contracting States:
**DE ES FR**

(71) Applicant: ITALORA S.p.A.
Strada 4 Palazzo q5
I-20089 Rozzano Milanofiori(IT)

(72) Inventor: Negri, Emilio
Via Trenno, 136
I-20151 Milano(IT)

(74) Representative: Dr. Ing. A. Racheli & C.
Viale San Michele del Carso, 4
I-20144 Milano(IT)

(54) **Process and device for regulating and controlling a refrigeration unit.**

(57) It is envisaged that on reaching a warning temperature (Tg) the thermostat that operates the refrigeration unit is set on a lower temperature than the normal storage temperature (Tn), called fast freezing temperature (Tr), then during each cycle a typical cycle length is measured -duration of heating (t2-t3) or cooling (t3-t4)-and said length is compared with that of the preceding cycle, thus the thermostat setting is returned to normal storage temperature (Tn) only when said comparison indicates that two successive typical lengths are identical. The proposed device comprises a logic circuit capable of measuring a typical fast freezing cycle length, memorizing this length, then comparing it with the corresponding length of the next cycle, the result of said comparison serving as a basis for modifying the thermostat setting.

EP 0 288 967 A1

FIG. 1

## PROCESS AND DEVICE FOR REGULATING AND CONTROLLING A REFRIGERATION UNIT

This invention concerns a process and a device for regulating a cooling unit, in particular a freezer refrigeration unit, as well as controlling temperature variation in the freezer, for example when a fresh lot of goods is introduced.

In refrigerator systems in general and in freezers in particular, a part of considerable importance is the device for operating the refrigerator unit to carry out freezing, quickly as possible and at the lowest possible cost, of a certain amount of goods that is introduced into the freezer at a certain time. It may also be important to regain the temperature quickly if it increases suddenly for various reasons, such as a temporary power failure or prolonged opening of the freezer.

When the temperature inside the freezer rises, for any reason, beyond a certain pre-set limit (warning value), for example because a certain amount of goods at a higher temperature has been introduced, this heat source must be eliminated as soon as possible, by freezing it in the shortest possible time. At present, in order to do this, the refrigeration unit is made to operate "non-stop". The optimum duration of this exceptional action should, however, be regulated according to the amount of goods introduced.

With the devices currently used, operation of the unit is controlled by manual switches and the recovery duration in hours is calculated approximately by the user, or else it is determined by a timer set at 24 hours for example. This method, however, leads to an enormous waste of power, especially if the user forgets to operate the switch the second time to return to normal operation.

An automatic device has subsequently been created (Italian Patent No. 1.085.948) in which, when the temperature in the freezer exceeds a preset warning value, a logic circuit brings the setting of the refrigeration unit control thermostat circuit from the storage temperature to the fast freezing temperature, maintaining the latter in the neighbourhood of that value for a given number of cycles. This system takes into some account the amount of goods introduced, since the length of each cycle is a function of the amount of fresh goods put into the freezer. However, there is no certainty that a sufficient number of cycles has been carried out in this case either. There is therefore a tendency to exceed the required number, thus increasing costs. Otherwise there is danger that successful freezing of the lot introduced and even freezing of all the goods contained in the freezer will be jeopardized. Moreover, the pre-set number of cycles for the freezing temperature must be experimentally ascertained and defined for each freezer model.

The aim of this invention is to create a process and a device to regulate the temperature of a refrigerator that can be operated completely automatically, taking into account the exact amount of goods introduced, this without weighing the goods or measuring other parameters.

The aim has been achieved by envisaging that upon reaching a warning temperature, the refrigeration unit is set in operation, maintaining the temperature at a lower range than the normal storage temperature, measuring a typical length for each cycle, for example the duration of heating (between the lowest and highest value of said range) or the duration of the corresponding cooling, comparing the typical lengths measured during two successive cycles and consequently returning the thermostat setting to the normal storage temperature only when said two successive lengths are identical.

The device that operates this process is equipped with a logic circuit capable of measuring, memorizing and comparing said lengths.

An exemplary embodiment of a device according to the invention is described on the basis of the accompanying drawings in which:

Fig. 1 shows a diagram of temperature as a function of time in a freezer;

Fig. 2 shows a block diagram of the proposed device.

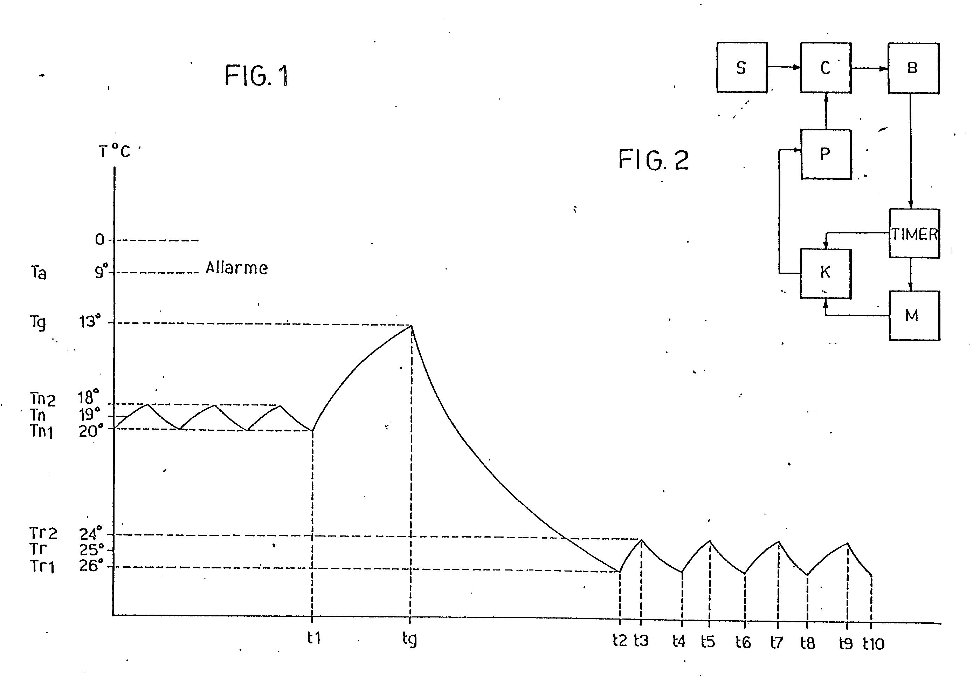

Figure 1 shows a diagram of temperature T as a function of time t. At the time zero the temperature fluctuates in a non-linear manner, between two values Tn1 and Tn2 that define the range of normal storage temperature (e.g. -19°C). This situation remains unchanged until moment t1; from this moment until moment tg the temperature increases until it reaches a value Tg (warning temperature) lower than the alarm temperature Ta. At this point the temperature decreases until it reaches value Tr1 at moment t2. From moment t2 to moment t10 it fluctuates in a range comprising a fast freezing temperature) between values Tr1 and Tr2.

This diagram illustrates the temperature pattern in a freezer in which the refrigeration unit is maintained in a normal operating state until momento t1; in this interval 0-t1 the temperature fluctuates in the range Tn1-Tn2 comprising the normal storage temperature Tn (e.g. -18° and -20°C). At moment t1 a certain amount of goods at room temperature is introduced into the freezer and, by giving up heat, raises the temperature of the freezer to the warning temperature Tg (.g. -13°C) reached at moment tg. On reaching the value Tg the refrigeration unit is put into "fast freezing" operation, thus lowering the temperature to the bottom limit tr1 (lower than Tn - e.g. -26°C), which is reached at moment t2. From now on the thermostat remains set to allow the temperature to fluctuate in the range (Tr1-Tr2) of fast freezing temperature Tr.

This state is maintained for an indefinite number of cycles and length of time, the interval of time in which said fluctuations take place being variable, depending upon the amount as well as many other parameters regarding the goods introduced. From cycle to cycle the time required for the temperature to rise from value Tr1 to value Tr2 increases and the time required for it to fall from value tr2 to value Tr1 decreases (t2-t3 t4-t5; t3-t4 t5-t6), until, freezing of the goods introduced being complete, said time intervals become stable, taking on the same value in one cycle and the next, they being only a function of the constants of the refrigerator. When a typical length of time, for example the interval required in a cycle for the temperature to rise from value Tr1 to value Tr2, coincides with the length of the previous cycle (t8-t9 = t6-t7), the thermostat setting is returned to the normal storage value Tn.

Operation is similar if heating times are to be compared instead of cooling times.

Figure 2 shows a typical block diagram of a regulating device as proposed. It comprises a probe S that sends the signal to a temperature comparing unit C the comparison value of which is defined by a potentiometer P. The comparing unit C operates a power buffer B that controls the refrigerating unit of the freezer and at the same time supplies data to a timer TIMER. The latter calculates a typical length of each cycle and sends the data to a memory M and to a comparator K. The memory M in turn sends the last value recorded to comparator K that thus carries out comparison of the typical lengths of two successive cycles. The result of this comparison is sent to the potentiometer P which, by modifying its value, causes the basic comparison value centained in the comparing unit C to change from the normal storage temperature Tn to the fast freezing temperature Tr and vice versa.

is returned to the normal storage temperature (Tn) only when said typical lengths prove to be identical.

2. A device for carrying out a process according to claim 1, characterized in that it has a logic circuit capable of measuring a typical freezing cycle length, then comparing it with the corresponding length of the previous cycle, and at last modifying the setting of the thermostat that controls the refrigerating unit only when the result of said comparison says that the two successive length are identical.

## Claims

1. A process for regulating and controlling a refrigerating unit in which it is envisaged that upon reaching a warning temperature (Tg) the refrigerating unit is operated in the range of a temperature (Tr), called the fast freezing temperature, which is lower than the normal storage temperature (TN), characterized in that during each fast freezing cycle, a typical cycle length is measured (duration of heating or cooling) and said duration is compared with that of the previous cycle, then the thermostat

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-2 831 476 (ITALORA S.p.A.) * Whole document * | 1,2 | F 25 D 29/00 |
| A | DE-A-2 630 111 (LICENTIA PATENT-VERWALTUNGS G.m.b.H.) * Whole document * | 1,2 | |
| A | GB-A-1 189 318 (HOLZER) | | |
| A | GB-A-2 180 962 (MITSUBISHI DENKI K.K.) | | |

**TECHNICAL FIELDS SEARCHED (Int. Cl.4)**

F 25 D

The present search report has been drawn up for all claims

| Place of search | Date of completion of the search | Examiner |
|---|---|---|
| THE HAGUE | 21-07-1988 | SILVIS H. |

EPO FORM 1503 03.82 (P0401)